(19) **Europäisches Patentamt**
**European Patent Office**
**Office européen des brevets**

(11) **EP 3 402 836 B1**

(12) **EUROPEAN PATENT SPECIFICATION**

(45) Date of publication and mention
of the grant of the patent:
**20.04.2022 Bulletin 2022/16**

(21) Application number: **16785434.8**

(22) Date of filing: **20.10.2016**

(51) International Patent Classification (IPC):
**C08J 9/34** (2006.01)     **B29C 45/00** (2006.01)
**C08L 23/06** (2006.01)     **C08J 3/28** (2006.01)

(52) Cooperative Patent Classification (CPC):
**C08J 9/34; C08J 9/06; C08J 9/12;** B29C 44/42;
B29K 2023/06; B29K 2023/065; B29K 2105/0014;
B29K 2105/0094; B29K 2105/046;
B29K 2995/0063; B29K 2995/0082;
B29K 2995/0097; B29L 2031/30; B29L 2031/7162;
B29L 2031/7178;                              (Cont.)

(86) International application number:
**PCT/EP2016/075167**

(87) International publication number:
**WO 2017/121506 (20.07.2017 Gazette 2017/29)**

(54) **FOAMED INJECTION MOULDED ARTICLE**

GESCHÄUMTER SPRITZGUSSARTIKEL

ARTICLE EXPANSÉ MOULÉ PAR INJECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.01.2016 EP 16150898**

(43) Date of publication of application:
**21.11.2018 Bulletin 2018/47**

(73) Proprietor: **SABIC Global Technologies B.V.
4612 PX Bergen op Zoom (NL)**

(72) Inventors:
• **GERRITS, Niclasina Siberta Johanna Alberdina
6160 GA Geleen (NL)**
• **JONGE DE, Harmen Maria Hendrik
6160 GA Geleen (NL)**

• **VAN ES, Martin Antonius
6160 GA Geleen (NL)**
• **YANEV, Angel
6160 GA Geleen (NL)**

(74) Representative: **Sabic Intellectual Property Group
Sabic Intellectual Property Department
P.O. Box 3008
6160 GA Geleen (NL)**

(56) References cited:
**WO-A1-00/64967      WO-A1-98/24836**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

(52) Cooperative Patent Classification (CPC): (Cont.)
C08J 2201/026; C08J 2201/03; C08J 2205/046;
C08J 2205/052; C08J 2207/00; C08J 2323/06

**EP 3 402 836 B1**

**Description**

The invention relates to a method for manufacturing a foamed injection moulded article comprising polyethylene foam.

The production of foamed injection moulded articles may take place via an injection moulding (IM) process. Injection moulding is a manufacturing process for producing parts by injecting material into a mould. Injection moulding can be performed with a broad range of materials, for example HDPE. Material for the part is fed into a heated barrel, mixed, and forced into a mould cavity, where it cools and hardens to the configuration of the cavity. For foamed injection moulding one can choose for chemical foaming or physical foaming. For chemical foaming a chemical blowing agent with or without a nucleating agent is added to the polymer and for physical foaming the most commonly used technique is MuCell® technology in which physical foaming involves injection moulding machine with gas charging. A plasticizing unit with a specially designed screw is an important feature of the system. The gas is injected directly into the plastic melt in the form of a super critical fluid from which the screw produces a homogeneous single-phase solution. A non-return valve prevents the gas/melt mixture expanding prematurely towards the feed end, and the machine's shut-off nozzle blocks the melt at the front end. Most commonly nitrogen or $CO_2$ are used as physical blowing agent. Examples of foam injection moulded products include pallets, crates, bins, boxes, pails and trays.

Rodrigue et al. published in 'Blowing agents and foaming processes 2007" (22-23 May 2007 Frankfurt-Germany) an article directed to injection moulded HDPE structural foams.

Polyethylene foams are described in Ullmann's Encyclopedia "Foamed Plastics" by Heinz Weber et al. (2002; Wiley VCH Verlag). These foams are classified as low density and high density foams. These foams may be non-crosslinked or crosslinked foams. Most polyolefin foams and most polyethylene foams are made from low density polyethylene (LDPE). Polyolefin foam may be produced via a chemical blowing process or via a physically blowing process. An important polyolefin foam is physically blown polyethylene foam which is commonly produced with blowing agents for example nitrogen, carbon dioxide, isobutane, pentane and cyclopentane.

The transport industry as a whole is facing several key challenges such as for example rising energy and transport costs leading to additional margin pressures, stringent recycling targets putting pressure on the transport industry and growing public pressure to reduce excessive use of materials and energy. These goals can be obtained by making lower weight pallets, crates and boxes.

The object of the present invention is to produce injection moulded HDPE articles with reduced weight compared to compact HDPE injection moulded articles for example pallets, crates, bins, boxes, pails, trays and many other injection moulded products produced via injection moulding. The articles must also show the desired values for mechanical properties such as for example flexural rigidity. This object is achieved by a method as defined in claim 1. Preferred embodiments are specified in the dependent claims.

The method of the invention involves foaming high density polyethylene (HDPE) having a quotient of melt strength and apparent viscosity > 2 cN/k.Pa.s wherein the melt strength is determined as described in ISO 16790:2005 and the apparent viscosity is determined as described in ISO 11443:2014.

The melt strength is determined as described in ISO 16790:2005 using a capillary rheometer with a drawing device that pulls the molten polymer from the capillary die at a constant flow rate and at increasing drawing velocity. The capillary rheometer is operated at a temperature of 190 °C. The preheating time is 300 seconds. The piston speed is 0.049 mm/s and the barrel diameter is 12 mm as a consequence the throughput is 5.5 $mm^3$/s and the apparent shear rate is 7 $s^{-1}$. The capillary has a length of 40 mm and a diameter of 2 mm and an entrance angle of 180° (flat). The take-off wheels operate at an initial speed of 1.8 mm/s and an acceleration of 1.2 $mm/s^2$. The melt strength is the maximum value of the drawing force which is usually realized at break of the extrudate.

The apparent viscosity is determined as described in ISO 11443:2014 using the same capillary rheometer and the same test conditions as described above for the determination of the melt strength. The apparent viscosity [Pa.s] is defined as the quotient of the apparent shear stress and the apparent shear rate.

According to the present invention the high density polyethylene (HDPE) has

- MI in the range between ≥ 0,01 and ≤ 50
- density in the range between ≥ 930 and ≤ 985 $kg/m^3$ and
- a gel fraction less than 5%

and the high density polyethylene (HDPE) has been obtained by chain branching high density polyethylene (HDPE) having

- MI in the range between ≥ 1 and ≤ 100 and
- density in the range between ≥ 930 and ≤ 985 $kg/m^3$ .

MI (melt index) is measured according ISO1133-1:2011 at a temperature of 190 °C at a load of 2.16 kg.

The density is measured at a temperature of 23°C according ISO1183-1:2012.

The gel content or gel fraction is determined according to ASTM D2765-11.

Generally, modifying by chain branching may be performed by electron beam irradiation, peroxide treatment, silane crosslinking, reactive extrusion or branching in the reactor. According to the present invention the chain branching takes place via electron beam irradiation.

EB irradiation is discussed in for example US5508319A, US5552104A, and by Keizo Makuuchi and Song Cheng, in Irradiation Processing of Polymer Materials and Its Industrial Applications (ISBN 978-0-470-58769-0, John Wiley & Sons, 2012).

According to a preferred embodiment of the invention the foam injection moulded article has a total density between 100 and 750 kg/m$^3$. The total density of the injection molded article is the total density of the compact skin and the foamed core.

Preferably the article comprises two compact skins and a foamed core between the two compact skins. The foamed core between the two compact skins is a foamed polyethylene layer.

Preferably the density of the polyethylene foam layer ranges between $\geq$ 100 and $\leq$ 600 kg/m$^3$.

More preferably the density of the polyethylene foam layer is $\leq$ 500 kg/m$^3$.

The density depends amongst others of the selection and amount of the blowing agent.

Suitable examples of the foam injection moulded article include pallets, crates, bins, boxes, pails, trays and injection moulded automotive parts.

The article according to the invention results in a weight reduction of more than 20 %, while the flexural rigidity remains on the same level or is improved relative to a compact system comprising no foam layer. Other additional advantages include for example improved thermal insulation properties and excellent recyclability relative to crosslinked HDPE articles.

Preferably the melt strength of polyethylene is $\geq$10 cN.

According to another preferred embodiment of the invention the HDPE to be foamed has a value for the quotient of melt strength and apparent viscosity > 3 cN/k.Pa.s and more preferably > 5 cN/k.Pa.s.

The melt index (MI) of the HDPE to be foamed ranges between $\geq$ 0.01 and $\leq$ 50 (measured according ISO1133-1:2011 at a temperature of 190 °C and at a load of 2.16 kg).

According to the present invention the HDPE foam composition for the foamed core has been obtained by foaming HDPE with characteristics

- MI in the range between $\geq$ 0,01 and $\leq$ 50
- density in the range between $\geq$ 930 and $\leq$ 985 kg/m$^3$ and
- a gel fraction less than 5%

which has been obtained by chain branching HDPE with characteristics

- MI in the range between $\geq$ 1 and $\leq$ 100 and
- density in the range between $\geq$ 930 and $\leq$ 985 kg/m$^3$

HDPE with increased melt strength is obtained by branching HDPE.

According to a preferred embodiment of the invention the HDPE foam composition has been obtained by foaming HDPE with characteristics

- MI in the range between $\geq$ 0,01 and $\leq$ 10
- density in the range between $\geq$ 930 and $\leq$ 985 kg/m$^3$ and
- a gel fraction less than 5%

which has been obtained by chain branching HDPE with characteristics

- MI in the range between $\geq$ 7 and $\leq$ 100 and
- density in the range between $\geq$ 930 and $\leq$ 985 kg/m$^3$

According to a further preferred embodiment of the invention the HDPE foam composition has been obtained by foaming HDPE with characteristics

- MI in the range between $\geq$ 0,1 and $\leq$ 10
- density in the range between $\geq$ 935 and $\leq$ 970 kg/m$^3$
- a gel fraction less than 5%

which has been obtained by chain branching HDPE with characteristics

- MI in the range between $\geq$ 10 and $\leq$ 100 and
- density in the range between $\geq$ 935 and $\leq$ 970 kg/m$^3$ .

According to another preferred embodiment of the invention the HDPE foam composition has been obtained by foaming HDPE with characteristics

- MI in the range between $\geq$ 0,1 and $\leq$ 10
- density in the range between $\geq$ 940 and $\leq$ 970 kg/m$^3$ and
- a gel fraction less than 3%

which has been obtained by chain branching HDPE with characteristics

- MI in the range between $\geq$ 12 and $\leq$ 50 and
- density in the range between $\geq$ 940 and $\leq$ 970 kg/m$^3$

According to another preferred embodiment of the invention the HDPE foam composition has been obtained by foaming HDPE with characteristics

- MI in the range between $\geq$ 0,1 and $\leq$ 10
- density in the range between $\geq$ 945 and $\leq$ 965 kg/m$^3$ and
- a gel fraction less than 2 %

which has been obtained by chain branching HDPE with characteristics

- MI in the range between $\geq$ 12 and $\leq$ 50 and
- density in the range between $\geq$ 945 and $\leq$ 965 kg/m$^3$

Suitable HDPE can be produced by chromium/silica catalysts, Ziegler-Natta catalysts or metallocene catalysts.
Preferably the compact layers on the outside are made with the same raw material.Preferably the polymer in the outer compact skin layers is HDPE. Due to differences in cooling rate between the outside and the inside of the product, the outside is compact and the inside is porous.
According to a preferred embodiment of the invention the ratio between foam layer thickness and total thickness between 0.20 and 0.95.
More preferably the ratio between the thickness of the foam core layer and the total thickness is between 0.40 and 0.90.
Most preferably the ratio between the thickness of the foam core layer and the total thickness is between 0.60 and 0.80.
The selected thickness ratio is dependent of both the desired application and the density of the foam core layer.
The foam has 50-80 % closed cells, preferably more than 90% closed cells.
The HDPE injection moulded foamed part may be produced via a chemical blowing process or via a physically blowing process of the HDPE.
The HDPE injection moulded foamed part can be produced for example with physical injection moulding foaming as described for example in US 6,169,122B1.
The foam injection moulded HDPE has a closed cell structure, a narrow cell size distribution, a low foam density and good flexural rigidity.
The density of the foamed low-density core is reduced by a factor of 2 to 3 compared to compact HDPE and the flexural rigidity of the multilayer system is increased by more than a factor 2, preferably even more than a factor 6.
A weight reduction of $\geq$ 20% results in a high sustainability score, because less polymer is used for a specific application and less polymer is wasted.
It is possible to combine the polyethylene according to the invention with small amounts of polyethylene to obtain the desired results in case the mixture has a quotient of melt strength and apparent viscosity > 2 cN/k.Pa.s.
HDPE foam composition is obtained by foaming HDPE with said specific characteristics at a specific temperature in the presence of a physical blowing agent.
Requirements for physical foaming of polyolefin compositions are disclosed in "How to choose a polyolefin grade for physical foaming "by Henk Ruinaart (Blowing agents and foaming processes 2005; Stuttgart Germany 10-11 May 2005).

The foaming conditions in the physical foaming process depend in part on the applied polymer. Generally, the temperature is close to the crystallisation temperature of the polymer.

The HDPE foam composition may comprise cell stabilizers selected from for example glycerol monostearate (GMS), glycerol monopalmitate (GMP), glycol di-stearate (GDS), palmitides and/or amides for example stearyl stearamide, palmitamide and/or stearamide.

The HDPE foam composition may also comprise a nucleating agent. Suitable nucleating agents include for example an amide, an amine, an ester of an aliphatic ($C_{10}$-$C_{34}$) carboxylic acid, talcum, micro talcum and a mixture of sodium bicarbonate and citric acid. The acid may be a saturated or unsaturated acid.

Suitable physical blowing agents include for example isobutane, $CO_2$, pentane, butane, nitrogen, isobutane with $CO_2$, nitrogen or pure $CO_2$ and/or a fluorohydrocarbon. Suitable chemical blowing agents for nucleation of polyethylene foam include for example exothermic chemical blowing agents and mixtures such as for example sodium hydrogen carbonate and citric acid derivatives (3-carboxy-3-hydroxypentane-1,5-dioic acid ; $C_6H8O_7$) and endo thermic blowing agents and mixtures such as for example azo-di-carbon-amide), hydrazo dicarbonamide, 4. 4'-oxybis (benzenesulfonyl hydrazide), N,N-dinitroso pentamethylene tetramine , 5-phenyltetrazole), p-toluene sulfonyl hydrazide and p-toluene sulphonyl semicarbazide. These blowing agents may be milled to very fine powders or may be added to finely milled carriers like calcium carbonate or talcum to improve their nucleating efficiency.

The HDPE foam composition may additionally contain other additives such as for example foam nucleating agents , flame retardants, pigments, lubricants, flow promoters, antistatic agents, processing stabilizers, long term stabilisers and/or UV stabilizers. The additives may be present in any desired amount to be determined by the man skilled in the art. These additives may be added pure or as a masterbatch before mixing this masterbatch with the polymer to be foamed.

Preferably the HDPE foam composition comprises HDPE as described in the foregoing and a blowing agent wherein the total density of the HDPE foamed article ranges between ≥ 100 and ≤ 750 kg/m³.

Preferably the HDPE foam composition is obtained with a physically foaming process at a temperature between 120 °C and 140°C with use of isobutane, isobutane with $CO_2$, nitrogen or pure $CO_2$ as the physical blowing agent.

According to 2. the present invention the foamed injection moulded article comprises a foam composition obtained by foaming high density polyethylene (HDPE) having a quotient of melt strength and apparent viscosity > 2 cN/k.Pa.s wherein the melt strength is determined as described in ISO 16790:2005 using a capillary rheometer with a drawing device that pulls the molten polymer from the capillary die at a constant flow rate and at increasing drawing velocity wherein the capillary rheometer is operated at a temperature of 190 °C, the preheating time is 300 seconds, the piston speed is 2. 0.049 mm/s, the barrel diameter is 12 mm, the capillary has a length of 40 mm , the diameter is 2 mm and the entrance angle is 180° (flat) , the take-off wheels operate at an initial speed of 1.8 mm/s and an acceleration of 1.2 mm/s² and the apparent viscosity is determined as described in ISO 11443:2014 using the same capillary rheometer and the same test conditions as for the determination of the melt strength and wherein the apparent viscosity [Pa.s] is defined as the quotient of the apparent shear stress and the apparent shear rate and wherein the high density polyethylene (HDPE) has

- MI (melt index) in the range between ≥ 0,01 and ≤ 50
- density in the range between ≥ 930 and ≤ 985 kg/m³ and
- a gel fraction less than 5%.
 and the high density polyethylene (HDPE) has been obtained by chain branching employing electron beam irradiation , high density polyethylene (HDPE) having
- MI in the range between ≥ 1 and ≤ 100 and
- density in the range between ≥ 930 and ≤ 985 kg/m³ .

WO 9824836 discloses an article of manufacture comprising a foamed high density polyethylene wherein said polyethylene, prior to foaming, has a density of at least 0.93 g/cc, a melt strength of 5 to 20 grams and a melt viscosity, at 0.1 rad/s, of 4 to 10 (kPa-s); wherein after foaming, the density of the foamed polyethylene is at least 20% less than said at least 0.93 g/cc density. WO 9824836 does not disclose or indicate values for the apparent viscosity. The melt viscosity at 0.1 rad/s of HDPE according to the present invention is higher than 10 kPa-s.

WO 0064967 is directed to a process for forming articles consisting of foamed HDPE having an original density, prior to foaming, of at least 0.94 g/cc, comprising treating said HDPE, prior to foaming, with a peroxide. This process provides a peroxide treated high density polyethylene (whereas in contrast the present invention is directed to an irradiated high density polyethylene). HDPE has a low shear viscosity which is at least about 1.25 times the viscosity of the untreated HDPE measured at 0.1 rad./sec. and a high shear viscosity which is less than about 3.0 times the viscosity of the untreated HDPE measured at 100 rad./sec; admixing the peroxide treated HDPE with a blowing agent; and foaming the peroxide treated HDPE to form a closed cell foam product which exhibits a density reduction, as a result of foaming of over 20%. As shown by the comparative example the quotient of the melt strength and apparent viscosity is less than 2 cN/k.Pa.s. HDPE foam made with peroxide modified HDPE according to WO 0064967 has a higher density and a higher open cell content then HDPE foam made with HDPE according to the present invention.

The invention will be elucidated by means of the following non-restrictive examples.

Examples.

Electron beam irradiation of HDPE granules was carried out at using a 10 MeV Rhodotron. In order to improve the homogeneity of irradiation dose, HDPE was packed into bags of 600 x 450 x 100 mm$^3$ containing 12.5 kg HDPE granules. The 100 mm thick bags were radiated with the target irradiation dose on two sides in order to further improve the homogeneity of the irradiation dose.

The irradiated HDPE was characterized by the following measurements:

The melt strength was measured according ISO 16790:2005 using a Göttfert Rheograph 6000 in combination with a Rheotens 71.97. The equipment specifications are:

• Oven diameter of 12mm.
• Capillary 40/2 (l/d), length 40mm, diameter 2mm, entrance angle 180° (flat).
• Pressure transducer: max 200bar.

The test conditions were as follows: the rheograph was filled in less than one minute and the sample preheating time was 300 seconds. The measuring temperature was 190 °C. The speed of the piston was 0.049 mm/s corresponding to a throughput of 5.5 mm$^3$/s and apparent shear-rate of 7 s$^{-1}$. The drawing device (Rheotens 71.97) was operated at an acceleration of 1.2 mm/s$^2$ and a velocity of 1.8 mm/s. The melt strength is expressed in cN.

The apparent viscosity was measured according ISO11443:2014 using the Göttfert Rheograph 6000 and the test conditions being described for the determination of the melt strength. The apparent viscosity is defined as the quotient of the apparent shear stress and the apparent shear rate being 7 s$^{-1}$. The apparent shear stress is calculated from pressure drop [kPa] times the capillary diameter in mm divided by 4 times the length of the capillary in mm. The apparent shear rate (1/s) is calculated from the throughput (mm/s) divided by 6,28 times the diameter (mm) to the power of 3. The apparent viscosity is usually expressed in kPa.s.

The melt index was measured according ISO1133-1:2011 at a temperature of 190 °C and at 2.16 kg.

The density of the compression moulded HDPE disks was measured at a temperature of 23°C according to ISO1183-1:2012 after at least one day of conditioning.

SABIC HDPE type CC3054 with a melt index of 27.5 (190 °C, 2.16 kg) is used as a raw material. Table 1 and Table 2 show characteristics of electron beam irradiated HDPE type CC3054 (HDPE I, HDPE II) as compared to the values for unmodified HDPE type CC 3054 (HDPE A) and HDPE type 3H671 (HDPE B).

Table 1: Characteristics of electron beam irradiated HDPE (HDPE I, HDPE II) and comparative examples (HDPE A and HDPE B)

| HDPE resin | Irradiation dose kGy | Melt index 90 °C, 2.16 kg) | Density kg/m$^3$ | Gel fraction % |
|---|---|---|---|---|
| HDPE I | 30 | 1.8 | 950 | 0.8 |
| HDPE II | 40 | 0.4 | 950 | 1.0 |
| HDPE A | 0 | 27.5 | 953 | n.a. |
| HDPE B | 0 | 2.1 | 954 | n.a. |

Table 2: Melt strength and apparent viscosity of electron beam irradiated HDPE (HDPE I, HDPE II) and comparative examples (HDPE A and HDPE B)

| HDPE resin | Irradiation dosis kGy | Melt strength cN | Apparent viscosity kPa.s | Ratio between melt strength and apparent viscosity cN/kPa.s |
|---|---|---|---|---|
| HDPE I | 30 | 15.4 | 2.9 | 5.3 |
| HDPE II | 40 | 13.9 | 2.5 | 5.6 |
| HDPE A | 0 | 0.2 | 0.32 | 0.63 |
| HDPE B | 0 | 1.2 | 2.5 | 0.5 |

Injection moulding foaming of HDPE was carried using an injection moulding machine type Engel DUO 1350H-1350M-450 with MuCell technology for foaming. This machine was equipped with a Variotherm; the mould can be heated and cooled down in a controlled manner during an injection cycle. Furthermore the mould can be opened after the injection phase of the process. The foam injection moulded plate produced on this machine has a length of 400 mm, a width of 200 mm and a minimal thickness of 3 mm with upstanding edges. The technical machine specifications are given in Table 3.

Table 3: Injection moulding machine specification for Engel DUO 450 Combi M

| Parameter | Unit | Value |
|---|---|---|
| Injection unit with MuCell technology | - | - |
| Single Screw diameter | mm | 60 |
| L/D ratio | - | 24 |
| Maximum injection volume | $cm^3$ | 450 |
| Maximum injection pressure | bar | 1800 |
| Maximum processing temperature | °C | 450 |
| Clamping force | kN | 4500 |
| Clamping unit | - | Hydraulic |
| Minimum dimension | mm | 400 |
| Maximum dimension | mm | 1200 |

Talc is added as a nucleating agent. Nitrogen is used as physical blowing agent. Hydrocerol is used as both a chemical blowing agent and a nucleating agent. Table 4 provides information with respect to additives.

Table 4: Nucleating agent and blowing agents.

| Commercial name | Chemical name | Master batch | |
|---|---|---|---|
| Schulman PBHFPE50T | Talc | 50% in LDPE | Nucleating agent |
| Clariant ITP473 | Hydrocerol | 65% in LDPE | Nucleating agent |
| $N_2$ | Nitrogen | - | Physical blowing agent |
| Clariant CF40E | Hydrocerol | 40% in LDPE | Chemical blowing agent |

Table 5, and Table 6 show the machine settings for respectively physical foaming and chemical foaming of mould HDPE.

Table 5: Machine settings for injection moulding foaming using MuCell technology (physical foaming), Variotherm and mould opening

| Parameter | Unit | Example I | Example II | Example III | Comparative Example A | Comparative Example B |
|---|---|---|---|---|---|---|
| HDPE | type | HDPE I | HDPE I | HDPE II | HDPE A | HDPE B |
| Nitrogen | weight % | 0.5 | 0.5 | 0.5 | 0.15 | 0.3 |
| Talc | weight % | 2 | 2 | 2 | 2 | 2 |
| ITP473 | weight % | 0 | 1 | 1 | 1 | 1 |
| Melt temperature | °C | 210 | 210 | 210 | 210 | 200 |
| Dosing volume | $cm^3$ | 400 | 400 | 400 | 400 | 400 |
| Injection time | s | 4.6 | 4.6 | 4.6 | 4.5 | 4.5 |
| Active cooling started | s | 10 | 10 | 10 | 10 | 10 |
| Cooling time in mould | s | 60 | 60 | 60 | 60 | 60 |
| Delay time (time to mould opening) | s | 1 | 1 | 1 | 1 | 1 |

(continued)

| Parameter | Unit | Example I | Example II | Example III | Comparative Example A | Comparative Example B |
|---|---|---|---|---|---|---|
| HDPE | type | HDPE I | HDPE I | HDPE II | HDPE A | HDPE B |
| Variotherm hot | °C | 120 | 120 | 120 | 120 | 110 |
| Variotherm cold | °C | 40 | 40 | 40 | 30 | 40 |

Table 6: Machine settings for injection moulding foaming using a chemical blowing agent (CF40E) and a fixed cold mould (no Variotherm, no mould opening).

| Parameter | Unit | Example V | Comparative Example C |
|---|---|---|---|
| HDPE | type | HDPE I | HDPE A |
| CF40E | weight % | 2.0 | 2.0 |
| Melt temperature | °C | 220 | 220 |
| Dosing volume | cm$^3$ | 500 | 500 |
| Injection time | s | 0.75 | 0.75 |
| Cooling time in mould | s | 160 | 160 |

The total density of the foam injection moulded plates is determined by the immersion method, also referred to as Archimedes method. The density is expressed in kg/m$^3$.

The open cell content was determined using a gas pycnometer. Samples with a weight around 10 gram were taken. The pycnometer pressurizes the foam with nitrogen. Open cells in the foam are filled with nitrogen, while closed cells are not. Consequently, the volume of the foam that cannot be filled by the nitrogen gas equals the volume of the closed cells. The open cell content is defined as:

$$\text{Open cell content} = 1 - V_{pycn} / V_{geo}$$

$V_{pycn}$ = the sample volume measured by the pycnometer = closed cell volume

$V_{geo}$ = the geometric volume of the sample

Using Archimedes principle, the geometric volume of a sample is measured with a balance by determining the upward force of the sample while being submerged under water. Then the sample is placed in the pycnometer and the volume of the sample in nitrogen is measured. The pressurized nitrogen compresses the closed cells and reduces their volume. To measure the actual, not pressurized, closed cell volume the sample volume is determined at several pressures and the apparent volume at a pressure of 0 bar is determined by extrapolation.

The cellular morphology of the HDPE foams was visualized using scanning electron microscopy. Each sample was frozen with liquid nitrogen and fractured. The fractured surface was made conductive by sputtering deposition of gold and observed using a Jeol JSM-820 operating at 20 kV. The microstructure of the materials has been studied in one plane (machine direction, thickness direction). Three micrographs were taken with a magnification of x30. The cell size was calculated using an image processing tool based on the software Image J. The fraction foam is defined as the quotient of the thickness of the foam layer and the total thickness. The fraction skin is defined as the quotient of the thickness of the two skin layers and the total thickness.

The flexural properties of the foam injection moulded samples were determined using ISO 178:2010 as a guideline. Five tests per sample were conducted.

A sample width of 10 mm and a length of 80 mm was used. Following testing conditions were applied:

| | |
|---|---|
| Support distance | 50.65 mm |
| Testing speed | 2 mm/min |
| Modulus | between 0.05 and 0.25% strain |
| Temperature | 23 °C |

The flexural rigidity (F) is defined as the product of the modulus (E) by the moment of inertia (I). The moment of inertia (I = width x thickness$^3$/12) is influenced by the thickness of the specific test specimen, whereas the modulus is a material property. In order to compare samples correctly, the thickness used to determine the moment of inertia (I) is corrected for the weight per surface area of the test specimen assuming a linear relationship between the weight per surface area and thickness. In this way data for equal weight per surface area are compared. In this report, the flexural rigidity (F) is calculated for a weight per surface area of 3 kg/m$^2$ (via correction in thickness) using the following formula:

$$Flexural\ rigidity\ (F) = flexural\ modulus\ (E) \times \frac{width\ \times\ thickness^3}{12}$$

The change in flexural rigidity upon foaming is calculated by dividing the flexural rigidity of a foam injection moulded sample by the flexural rigidity of the compact 3 mm thick material being 0.0285 N. m$^2$

The structural and flexural properties of foam injection moulded HDPE are shown in Table 7 and Table 8. Articles made with electron beam irradiated HDPE of this invention have a relative low density and open cell content as compared to the standard HDPE (Comparative examples) .The articles made with electron beam irradiated HDPE have a flexural rigidity being at least a factor 3 higher than compact material with the same weight. Samples produced with standard HDPE only show a limited increase (less than factor 3) in flexural rigidity compared to compact material with the same weight.

Table 7: Structural and flexural properties of foam injection moulded plates produced with MuCell®technology (physical foaming), Variotherm and mould opening as described in Table 5.

| Parameter | Unit | Example I | Example II | Example III | Comparative Example A | Comparative Example B |
|---|---|---|---|---|---|---|
| Total density | kg/m$^3$ | 356 | 376 | 383 | 626 | 553 |
| Open cell content | % | 16 | 30 | 30 | 90 | 16 |
| Cell size | μm | 1386 | 121 | 156 | - | - |
| Fraction foam | - | 0.81 | 0.89 | 0.88 | 0.76 | 0.82 |
| Thickness | mm | 8.5 | 8.6 | 8.5 | 5.1 | 5.5 |
| Flexural modulus | N/mm$^2$ | 412 | 306 | 351 | 759 | 556 |
| Flexural rigidity change | - | 7.2 | 4.6 | 4.9 | 2.4 | 2.6 |

Table 8 : Structural and flexural properties of foam injection moulded plates using a chemical blowing agent (CF40E) and a fixed cold mould as described in Table 6.

| Parameter | Unit | Example IV | Comparative Example C |
|---|---|---|---|
| Total density | kg/m$^3$ | 481 | 577 |
| Open cell content | % | 11 | 74 |
| Cell size | μm | 153 | 188 |
| Fraction foam | - | 0.78 | 0.89 |
| Thickness | mm | 8.4 | 8.4 |
| Flexural modulus | N/mm$^2$ | 455 | 387 |
| Flexural rigidity change | - | 3.3 | 1.6 |

**Claims**

1.   Method for manufacturing a foamed injection moulded article comprising

a) chain branching of a high density polyethylene by electron beam irradiation, the high density polyethylene (HDPE) having a

- MI in the range between ≥ 1 and ≤ 100 and
- density in the range between ≥ 930 and ≤ 985 kg/m3

resulting in HDPE having

- MI (melt index) in the range between ≥ 0.01 and ≤ 50
- density in the range between ≥ 930 and ≤ 985 kg/m3 and
- a gel fraction less than 5%
- a quotient of melt strength and apparent viscosity > 2 cN/k.Pa.s

wherein

the MI (melt index) is measured according to ISO 1133-1:2011 at a temperature of 190 °C at a load of 2.16 kg,
the density is measured at a temperature of 23°C according to ISO 1183-1:2012,
the gel fraction is determined according to ASTM D2765-11,
the melt strength of the high density polyethylene is determined as described in ISO 16790:2005 under the conditions described in the description,
the apparent viscosity is determined as described in ISO 11443:2014 under the conditions described in the description,

b) injection moulding foaming the obtained HDPE using a physical or chemical blowing agent.

2. Method of claim 1 wherein the article comprises two compact skins and a foamed core between the two compact skins.

3. Method according to Claim 2 wherein chain branching of HDPE with characteristics

- MI in the range between ≥ 7 and ≤ 100 and
- density in the range between ≥ 930 and ≤ 985 kg/m3

takes place via electron beam irradiation, thereby forming HDPE with characteristics

- MI in the range between ≥ 0.01 and ≤ 10
- density in the range between ≥ 930 and ≤ 985 kg/m3
- a gel fraction less than 5%.

4. Method according to any one of Claims 2 - 3 wherein chain branching of HDPE with characteristics

- MI in the range between ≥ 10 and ≤ 100 and
- density in the range between ≥ 935 and ≤ 970 kg/m3

takes place via electron beam irradiation, thereby forming HDPE with characteristics

- MI in the range between ≥ 0.1 and ≤ 10
- density in the range between ≥ 935 and ≤ 970 kg/m3
- a gel fraction less than 5%.

5. Method according to any one of Claims 2-4 wherein chain branching of HDPE with characteristics

- MI in the range between ≥12 and ≤ 50 and
- density in the range between ≥ 940 and ≤ 970 kg/m3

takes place via electron beam irradiation, thereby forming HDPE with characteristics

- MI in the range between ≥ 0.1 and ≤ 10
- density in the range between ≥ 940 and ≤ 970 kg/m3
- a gel fraction less than 3%.

6. Method of claim 2-5 wherein the article is **characterised in that** the ratio between foam core layer thickness and total thickness is between 0.20 and 0.95.

7. Method of claim 6 **characterised in that** the ratio between foam core layer thickness and total thickness is between 0.40 and 0.90.

8. Method of claim 1-7 wherein the article is **characterised in that** the density of the polyethylene foam layer ranges between $\geq 100$ and $\leq 600$ kg/m3.

## Patentansprüche

1. Verfahren zur Herstellung eines injektionsgeformten Schaumgegenstands, das Folgendes umfasst:

   a) Kettenverzweigen eines Polyethylens hoher Dichte durch Elektronenbestrahlung, wobei das Polyethylen hoher Dichte (HDPE, high density polyethylene) Folgendes aufweist:

   - einen MI im Bereich zwischen $\geq 1$ und $\leq 100$ und
   - eine Dichte im Bereich zwischen $\geq 930$ und $\leq 985$ kg/m3

   was zu einem HDPE mit Folgendem führt:

   - einem MI (melt index, Schmelzindex) im Bereich zwischen $\geq 0,01$ und $\leq 50$
   - einer Dichte im Bereich zwischen $\geq 930$ und $\leq 985$ kg/m3 und
   - einer Gelfraktion von weniger als 5 %
   - einem Quotienten der Schmelzstärke und scheinbarer Viskosität von > 2 cN/k.Pa.s wobei

     der MI (melt index, Schmelzindex) gemäß ISO 1133-1:2011 bei einer Temperatur von 190 °C bei einer Belastung von 2,16 kg gemessen wird,
     die Dichte bei einer Temperatur von 23 °C gemäß ISO 1183-1:2012 gemessen wird,
     die Gelfraktion gemäß ASTM D2765-11 bestimmt wird,
     die Schmelzstärke des Polyethylens hoher Dichte wie in ISO 16790:2005 beschrieben unter den in der Beschreibung beschriebenen Bedingungen bestimmt wird,
     die scheinbare Viskosität wie in ISO 11443:2014 beschrieben unter den in der Beschreibung beschriebenen Bedingungen bestimmt wird,

   b) Injektionsschaumformen des erhaltenen HDPE unter Verwendung eines physikalischen oder chemischen Treibmittels.

2. Verfahren nach Anspruch 1, wobei der Gegenstand zwei kompakte Häute und einen Schaumkern zwischen den zwei kompakten Häuten umfasst.

3. Verfahren nach Anspruch 2, wobei das Kettenverzweigen des HDPE mit den Merkmalen

   - MI im Bereich zwischen $\geq 7$ und $\leq 100$ und
   - Dichte im Bereich zwischen $\geq 930$ and $\leq 985$ kg/m3

   über eine Elektronenbestrahlung stattfindet, wodurch HDPE mit den folgenden Merkmalen gebildet wird:

   - MI im Bereich zwischen $\geq 0,01$ und $\leq 10$
   - Dichte im Bereich zwischen $\geq 930$ und $\leq 985$ kg/m3
   - einer Gelfraktion von weniger als 5 %.

4. Verfahren nach einem der Ansprüche 2 bis 3, wobei das Kettenverzweigen des HDPE mit den Merkmalen

   - MI im Bereich zwischen $\geq 10$ und $\leq 100$ und
   - Dichte im Bereich zwischen $\geq 935$ and $\leq 970$ kg/m$^3$

über eine Elektronenbestrahlung stattfindet, wodurch HDPE mit den folgenden Merkmalen gebildet wird:

- MI im Bereich zwischen ≥ 0,1 und ≤ 10
- Dichte im Bereich zwischen ≥ 935 und ≤ 970 kg/m3
- einer Gelfraktion von weniger als 5 %.

**5.** Verfahren nach einem der Ansprüche 2 bis 4, wobei das Kettenverzweigen des HDPE mit den Merkmalen

- MI im Bereich zwischen ≥ 12 und ≤ 50 und
- Dichte im Bereich zwischen ≥ 940 and ≤ 970 kg/m3

über eine Elektronenbestrahlung stattfindet, wodurch HDPE mit den folgenden Merkmalen gebildet wird:

- MI im Bereich zwischen ≥ 0,1 und ≤ 10
- Dichte im Bereich zwischen ≥ 940 und ≤ 970 kg/m3
- einer Gelfraktion von weniger als 3 %.

**6.** Verfahren nach Anspruch 2 bis 5, wobei der Gegenstand **dadurch gekennzeichnet ist, dass** das Verhältnis von Schaumkemschichtdicke zu Gesamtdicke zwischen 0,20 und 0,95 liegt.

**7.** Verfahren nach Anspruch 6, **dadurch gekennzeichnet, dass** das Verhältnis von Schaumkernschichtdicke und Gesamtdicke zwischen 0,40 und 0,90 liegt.

**8.** Verfahren nach Anspruch 1 bis 7, wobei der Gegenstand **dadurch gekennzeichnet ist, dass** die Dichte der Polyethylenschaumschicht in einem Bereich zwischen ≥ 100 and ≤ 600 kg/m$^3$ liegt.

## Revendications

**1.** Procédé de fabrication d'un article moulé par injection en mousse comprenant

a) une ramification en chaîne d'un polyéthylène haute densité par irradiation par faisceau d'électrons, le polyéthylène haute densité (PEHD) ayant

- un MI dans la plage comprise entre ≥ 1 et ≤ 100 et
- une densité dans la page comprise entre ≥ 930 et ≤ 985 kg/m$^3$ résultant en un PEHD ayant
- un MI (indice de fusion) dans la plage comprise entre ≥ 0,01 et ≤ 50
- une densité dans la plage comprise entre ≥ 930 et ≤ 985 kg/m$^3$ et
- une fraction de gel inférieure à 5%
- un quotient de résistance à l'état fondu et de viscosité apparente > 2 cN/k.Pa.s dans lequel le MI (indice de fluidité) est mesuré selon ISO 1133-1:2011 à une température de 190°C sous une charge de 2,16 kg,

la densité est mesurée à une température de 23°C selon ISO 1183-1:2012,
la fraction de gel est déterminée selon ASTM D2765-11,
la résistance à l'état fondu du polyéthylène haute densité est déterminée comme décrit dans ISO 16790:2005 sous les conditions décrites dans la description,
la viscosité apparente est déterminée comme décrit dans ISO 11443:2014 dans les conditions décrites dans la description,

b) un moulage par injection en mousse du PEHD obtenu en utilisant un agent gonflant physique ou chimique.

**2.** Procédé selon la revendication 1 dans lequel l'article comprend deux peaux compactes et un cœur en mousse entre les deux peaux compactes.

**3.** Procédé selon la revendication 2, dans lequel la ramification en chaîne de PEHD avec des caractéristiques

- un MI dans la plage comprise entre ≥ 7 et ≤ 100 et
- une densité dans la plage comprise entre ≥ 930 et ≤ 985 kg/m$^3$

a lieu par irradiation par faisceau d'électrons, formant ainsi le PEHD avec des caractéristiques

- un MI dans la plage comprise entre $\geq$ 0,01 et $\leq$ 10
- une densité dans la plage comprise entre $\geq$ 930 et $\leq$ 985 kg/m$^3$
- une fraction de gel inférieure à 5 %.

4. Procédé selon l'une quelconque des revendications 2 à 3, dans lequel la ramification en chaîne de PEHD avec des caractéristiques

- un MI dans la plage comprise entre $\geq$ 10 et $\leq$ 100 et
- une densité dans la plage comprise entre $\geq$ 935 et $\leq$ 970 kg/m$^3$

a lieu par irradiation par faisceau d'électrons, formant ainsi le PEHD avec des caractéristiques

- un MI dans la plage comprise entre $\geq$ 0,1 et $\leq$ 10
- une densité dans la plage comprise entre $\geq$ 935 et $\leq$ 970 kg/m$^3$
- une fraction de gel inférieure à 5 %.

5. Procédé selon l'une quelconque des revendications 2 à 4, dans lequel la ramification en chaîne de PEHD avec des caractéristiques

- un MI dans la plage comprise entre $\geq$ 12 et $\leq$ 50 et
- une densité dans la plage comprise entre $\geq$ 940 et $\leq$ 970 kg/m$^3$

a lieu par irradiation par faisceau d'électrons, formant ainsi le PEHD de caractéristiques

- un MI dans la plage comprise entre $\geq$ 0,1 et $\leq$ 10
- une densité dans la plage comprise entre $\geq$ 940 et $\leq$ 970 kg/m$^3$
- une fraction de gel inférieure à 3 %.

6. Procédé selon la revendication 2 à 5, dans lequel l'article est **caractérisé en ce que** le rapport entre l'épaisseur de la couche centrale en mousse et l'épaisseur totale est compris entre 0,20 et 0,95.

7. Procédé selon la revendication 6 **caractérisé en ce que** le rapport entre l'épaisseur de la couche centrale en mousse et l'épaisseur totale est compris entre 0,40 et 0,90.

8. Procédé selon les revendications 1 à 7, dans lequel l'article est **caractérisé en ce que** la densité de la couche en mousse de polyéthylène est comprise entre $\geq$ 100 et $\leq$ 600 kg/m$^3$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5508319 A
- US 5552104 A
- US 6169122 B1
- WO 9824836 A
- WO 0064967 A

### Non-patent literature cited in the description

- **RODRIGUE et al.** *Blowing agents and foaming processes 2007,* 22 May 2007
- Foamed Plastics. **HEINZ WEBER et al.** Ullmann's Encyclopedia. Wiley VCH Verlag, 2002
- **KEIZO MAKUUCHI ; SONG CHENG.** Irradiation Processing of Polymer Materials and Its Industrial Applications. John Wiley & Sons, 2012
- **HENK RUINAART.** How to choose a polyolefin grade for physical foaming. *Blowing agents and foaming processes,* 2005